# EUROPÄISCHE PATENTSCHRIFT

(11) **EP 2 315 815 B1**
(45) Veröffentlichungstag und Bekanntmachung des Hinweises auf die Patenterteilung: **08.01.2014**
(21) Anmeldenummer: 09781801.7
(22) Anmeldetag: 13.08.2009
(51) Int. Cl.: C09D 201/00, C09D 133/14, C09D 133/02, C09D 139/00

(54) **VERFAHREN ZUR HERSTELLUNG VON VERPACKUNGEN MIT FETTBARRIEREEIGENSCHAFTEN**
PROCESS FOR MANUFACTURE OF PACKAGING WITH GREASE BARRIER PROPERTIES
PROCÉDÉ DE FABRICATION D'EMBALLAGES AYANT DES PROPRIÉTÉS DE BARRIÈRE AUX GRAISSES

(30) Priorität: 21.08.2008 EP 08162769
(43) Veröffentlichungstag der Anmeldung: 04.05.2011
(73) Patentinhaber: BASF SE, 67056 Ludwigshafen (DE)
(72) Erfinder: CIMPEANU, Carmen-Elena, 67059 Ludwigshafen (DE); BREINER, Thomas, 69514 Laudenbach (DE); URBAN, Dieter, 67346 Speyer (DE); SEYFFER, Hermann, 69123 Heidelberg (DE); SCHÄDLER, Volker, Ann Arbor, MI 48104 (US); FEUERHAKE, Robert, 68163 Mannheim (DE); ROY, Soumyajit, F-67000 Strasbourg (FR); AWKAL, Michel, F-68300 Saint Louis (FR)
(86) Internationale Anmeldenummer: PCT/EP2009/060495
(87) Internationale Veröffentlichungsnummer: WO 2010/020581

(56) Entgegenhaltungen:
- WO-A1-2006/087344
- DE-A1- 4 428 641

## Beschreibung

Die Erfindung betrifft ein Verfahren zur Herstellung von Verpackungen, wobei die Verpackungsoberfläche mit einem Polyelektrolytkomplex beschichtet wird und wobei der Polyelektrolytkomplex aus mindestens einem ersten Polymer und mindestens einem zweiten Polymer besteht, wobei das erste Polymer ein anionisches Polymer und das zweite Polymer ein kationisches Polymer ist. Die Verpackungen zeichnen sich durch gute Fettbarriereeigenschaften aus.

Beim Verpacken von öl- oder fetthaltigen Produkten ist es wichtig, dass die verwendeten Verpackungsmaterialien einen hohen Durchdringungswiderstand gegen Fette und Öle oder gute Fettbarriereeigenschaften aufweisen. Bekannt sind verschiedene Verfahren, welche geeignet sind, Verpackungsmaterialien, insbesondere auf Basis von Papier oder Karton, einen Durchdringungswiderstand gegen Fette und Öle zu verleihen. Hierzu können die Materialien beispielsweise mit Lösungen oder wässrigen Dispersionen von nativen oder synthetischen Polymeren, Paraffinen , Wachsen oder fluorierten Kohlenwasserstoffen imprägniert oder beschichtet werden. Dabei handelt es sich z.B. um Lösungen von Stärken und Stärkederivaten, Galaktomannanen, Carboxymethylcellulosen, Polyvinylalkoholen oder Lösungen von anderen synthetischen Polymeren beispielsweise anionischen Polyacrylamiden. Ein nach einem solchen Verfahren hergestelltes Papier verfügt nur über eine niedrige Fettdichte. Bekannt sind auch Verfahren, nach denen das Papier innerhalb oder außerhalb der Papiermaschine mit wässrigen Dispersionen von Polymeren, Paraffinen oder Wachsen imprägniert oder beschichtet wird. Bekannt sind weiterhin Verfahren, nach welchen mit Schmelzen von Polymeren, Hotmelts, Wachsen oder Paraffinen Papieren auf dem Weg der Extrusionsbeschichtung hohe Durchdringungswiderstände gegen Fette und Öle verliehen werden.

Aus der EP 1498544 sind Beschichtungen auf Basis von Polymeremulsionen für Cellulosesubstrate mit Barriereeigenschaften bekannt. Bei den Polymeren handelt es sich um Ethylen-Vinylacetat Copolymere (EVA). Aus der US 2007092718 ist ein Verfahren bekannt zur Verbesserung der Fett- und/oder Wasserresistenz von Materialien, wobei das Material mit Wachs und Polyvinylalkohol behandelt wird. Aus der DE 10 2005 007 483 sind wässrige Dispersionen von überwiegend anionisch geladenen Polyelektrolytkomplexen bekannt. Aus der DE 4428641 sind mesomorphe Komplexe, d.h. Komplexe mit flüssigkristalliner Struktrur bekannt sowie Filme, Folien, Fasern, Formkörper und Beschichtungen hieraus. Die Komplexe bestehen aus Polyelektrolyten und Tensiden. Häufig sind Fettbarrierebeschichtungen mit Filmen auf Polymerbasis nicht ausreichend flexibel. Es kann dann beim Knicken oder Falten im Bereich von Faltstellen, z.B. Kanten oder Ecken von Faltschachteln oder Kartons zu einer Beschädigung des Barrierefilms und dadurch bedingter ungenügender Fettbarrierewirkungen kommen. Aufgabe der vorliegenden Erfindung war es, ein Verfahren zur Verfügung zu stellen, welches die Herstellung von Verpackungen mit guten Fett- und Ölbarriereeigenschaften, insbesondere auch im Bereich von Falten, Knicken und Ecken ermöglicht. Die Verpackungen sollten dabei möglichst gut temperaturresistent, flexibel und blockfest sein und möglichst keine gesundheitsschädlichen Stoffe wie z.B. Schwermetalle und möglichst keine Fluorcarbonverbindungen enthalten.

Gegenstand der Erfindung ist ein Verfahren zur Herstellung einer Verpackung, wobei mindestens ein Teil der Verpackungsoberfläche mit mindestens einem Polyelektrolytkomplex beschichtet wird, wobei der Polyelektrolytkomplex aus mindestens einem ersten Polymer und mindestens einem zweiten Polymer besteht, wobei das erste Polymer ein anionisches Polymer und das zweite Polymer ein kationisches Polymer ist.

Gegenstand der Erfindung ist auch eine Verpackung, hergestellt aus einem Verpackungsmaterial, dessen Oberfläche zumindest teilweise mit einem Polyelektrolytkomplex beschichtet ist, wobei der Polyelektrolytkomplex aus mindestens einem ersten Polymer und mindestens einem zweiten Polymer besteht, wobei das erste Polymer ein anionisches Polymer und das zweite Polymer ein kationisches Polymer ist.

Gegenstand der Erfindung ist auch die Verwendung von Polyelektrolytkomplexen zur Herstellung von beschichteten Verpackungen, wobei mindestens ein Teil der Oberfläche der Verpackung mit mindestens einem Polyelektrolytkomplex beschichtet ist, wobei der Polyelektrolytkomplex aus mindestens einem ersten Polymer und mindestens einem zweiten Polymer besteht, wobei das erste Polymer ein anionisches Polymer und das zweite Polymer ein kationisches Polymer ist.

Die mit dem Polyelektrolytkomplex hergestellte Beschichtung weist vorzugsweise Fettbarriereeigenschaften auf. Die Barriereeigenschaften können mit dem in den Beispielen beschriebenem Penetrationstest gemessen werden. Der Begriff Fettbarriereeigenschaft bedeutet eine gegenüber unbeschichtetem Substrat erhöhte Resistenz einer Substratoberfläche gegenüber dem Eindringen von Fetten, Ölen und fett- und ölartigen, hydrophoben Stoffen.

Polyelektrolyte sind ionische Polymere. Polyelektrolytkomplexe sind die Reaktionsprodukte von gegensätzlich geladenen ionischen Polymeren. In der Regel haben die Polyelektrolytkomplexe eine definierte stöchiometrische Zusammensetzung, d.h. das Äquivalentverhältnis von anionischen und kationischen Gruppen in diesen Komplexen liegt bei oder in der Nähe von 1. Die Polyelektrolytkomplexe können aber auch überwiegend anionisch oder überwiegend kationisch geladen sein. Erfindungsgemäß kann auch neben solchen Polyelektrolytkomplexen ein kationisches oder ein anionisches Polymer zusätzlich im Überschuss, d.h. in freier, nicht komplexierter Form vorhanden sein.

Bevorzugt eingesetzt werden wässrige Dispersionen von Polyelektrolytkomplexen. Die Polyelektrolytkomplexe sind vorzugsweise überwiegend anionisch geladen. Die Dispersionen können erhalten werden durch radikalische Polymerisation von ethylenisch ungesättigten anionischen Monomeren in wässrigem Medium in Gegenwart von mindestens einem kationischen Polymer in einer Ausführungsform werden die anionischen Monomeren in einer Menge eingesetzt, dass die Anzahl der anionischen Gruppen in den anionischen Monomeren die Anzahl der kationischen Gruppen in den kationischen Polymeren um mindestens 1 Mol-% übersteigt, gemessen bei pH 7 und 20°C. Ein geeignetes Herstellungsverfahren ist z.B. beschrieben in der DE 10 2005 007 483.

Die Menge an kationischem Polymer, das zur Herstellung des Polyelektrolytkomplexes verwendet wird, wird vorzugsweise so bemessen, dass man pro Mol der anionischen Gruppen des anionischen Polymers bzw. in den insgesamt bei der Polymerisation eingesetzten anionischen Monomeren beispielsweise bis zu 150 mol% oder bis zu 100 mol%, vorzugsweise 1 bis 99 mol% oder 2 bis 50 mol% kationische Gruppen mindestens eines kationischen Polymers einsetzt, gemessen bei pH 7 und 20°C. Die mit weniger als 100 mol% kationischer Gruppen entstehenden Polyelektrolytkomplexe sind bei pH 7 und 20°C überwiegend anionisch geladen.

Anionische Polymere sind Polymere mit anionischen Gruppen, insbesondere organische Polymere mit Carboxylat-, Phosphat- oder Sulfatgruppen. Es können auch die entsprechenden Säuren eingesetzt werden, sofern sie entweder durch im Reaktionsmedium enthaltene Basen neutralisiert werden oder durch basische Gruppen des kationischen Polymers in anionische Gruppen umgewandelt werden.

Geeignete anionische Polymere sind z.B. solche gebildet durch radikalische Polymerisation von ethylenisch ungesättigten, radikalisch polymerisierbaren anionischen Polymeren. Hiervon umfasst sind auch Copolymere aus mindestens einem anionischen Monomer und einem oder mehreren verschiedenen nichtionischen copolymerisierbaren Monomeren.

Als ethylenisch ungesättigte anionische Monomere kommen beispielsweise monoethylenisch ungesättigte C₃- bis C₁₀- oder C₃- bis C₅-Carbonsäuren wie Acrylsäure, Methacrylsäure, Ethacrylsäure, Crotonsäure, Maleinsäure, Fumarsäure, Vinylsulfonsäure, Styrolsulfonsäure, Acrylamidomethylpropansulfonsäure, Vinylphosphonsäure, Itaconsäure und die Alkalimetall-, Erdalkalimetall- oder Ammoniumsalze dieser Säuren in Betracht. Zu den bevorzugt eingesetzten anionischen Monomeren gehören Acrylsäure, Methacrylsäure, Maleinsäure und 2-Acrylamido-2-methylpropansulfonsäure. Besonders bevorzugt sind wässrige Dispersionen von Polymerisaten auf Basis von Acrylsäure. Die anionischen Monomeren können entweder allein zu Homopolymerisaten oder auch in Mischung untereinander zu Copolymerisaten polymerisiert werden. Beispiele hierfür sind die Homopolymerisate der Acrylsäure, Homopolymerisate der Methacrylsäure oder Copolymerisate aus Acrylsäure und Maleinsäure, Copolymerisate aus Acrylsäure und Methacrylsäure sowie Copolymerisate aus Methacrylsäure und Maleinsäure.

Die Polymerisation der anionischen Monomeren kann jedoch auch in Gegenwart mindestens eines anderen ethylenisch ungesättigten Monomeren durchgeführt werden. Diese Monomeren können nichtionisch sein oder aber eine kationische Ladung tragen. Beispiele für nichtionische Comonomere sind Acrylamid, Methacrylamid, N-C₁- bis C₃-Alkylacrylamide, N-Vinylformamid, Acrylsäureester von einwertigen Alkoholen mit 1 bis 20 C-Atomen wie insbesondere Methylacrylat, Ethylacrylat, Isobutylacrylat und n-Butylacrylat, Methacrylsäureester von einwertigen Alkoholen mit 1 bis 20 C-Atomen z.B. Methylmethacrylat und Ethylmethacrylat, sowie Vinylacetat und Vinylpropionat.

Geeignete kationische Monomere, die mit den anionischen Monomeren copolymerisierbar sind, sind Dialkylaminoethylacrylate, Dialkylaminoethylmethacrylate, Dialkylaminopropylacrylate, Dialkylaminopropylmethacrylate, Dialkylaminoethylacrylamide, Dialkylaminoethylmethacrylamide, Dialkylaminopropylacrylamide, Dialkylaminopropylmethacrylamide, Diallyldimethylammoniumchlorid, Vinylimidazol sowie die jeweils mit Säuren neutralisierten und/oder quaternierten basischen Monomeren. Einzelne Beispiele für kationische Monomere sind Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat und Diethylaminopropylmethacrylat, Dimethyaminoethylacrylamid, Dimethylaminoethylmethacrylamid, Dimethylaminopropylacrylamid, Dimethylaminopropylmethacrylamid, Diethylaminoethylacrylamid und Diethylaminopropylacrylamid.

Die basischen Monomeren können vollständig oder auch nur teilweise neutralisiert bzw. quaterniert sein, z.B. jeweils zu 1 bis 99 %. Bevorzugt eingesetztes Quaternierungsmittel für die basischen Monomeren ist Dimethylsulfat. Man kann die Quaternierung der Monomeren jedoch auch mit Diethylsulfat oder mit Alkylhalogeniden wie Methylchlorid, Ethylchlorid oder Benzylchlorid durchführen. Die kationischen Monomeren werden höchstens in einer Menge eingesetzt, dass die entstehenden Polyelektrolytkomplexe insgesamt bei pH-Werten < 6,0 und einer Temperatur von 20°C eine anionische Ladung tragen. Die anionische Überschussladung in den entstehenden amphoteren Polymeren beträgt z.B. mindestens 5 Mol-%, vorzugsweise mindestens 10 Mol-%.

Die Comonomere werden bei der Herstellung der anionischen Polyelektrolytkomplexe beispielsweise in solchen Mengen eingesetzt, dass die entstehenden Polymerdispersionen beim Verdünnen mit Wasser und bei pH-Werten oberhalb von 7,0 und einer Temperatur von 20°C wasserlöslich sind und eine anionische Ladung aufweisen. Bezogen auf die bei der Polymerisation insgesamt eingesetzten Monomeren beträgt die Menge an nichtionischen und/oder kationischen Comonomeren z.B. 0 bis 99, vorzugsweise 5 bis 75 Gew.-% und liegt meistens in dem Bereich von 5 bis 25 Gew.-%.

Beispiele für bevorzugte Copolymere sind Copolymerisate aus 25 bis 90 Gew.-% Acrylsäure und 75 bis 10 Gew.-% Acrylamid. Vorzugsweise polymerisiert man mindestens eine ethylenisch ungesättigte C₃ bis C₅-Carbonsäure in Abwesenheit von anderen monoethylenisch ungesättigten Monomeren. Besonders bevorzugt sind Homopolymerisate von Acrylsäure, die durch radikalische Polymerisation von Acrylsäure in Abwesenheit von anderen Monomeren erhältlich sind.

In einer Ausführungsform enthält das anionische Polymer 2-Acrylamido-2-methylpropansulfonsäure (AMPS). Bevorzugt ist Acrylsäure copolymerisiert mit AMPS. Die AMPS-Menge kann dabei beispielsweise von 0,1 bis 15 mol% oder von 0,5 bis 10 mol%, bezogen auf die Menge aller Monomere betragen.

Die Polymerisation kann zusätzlich in Gegenwart mindestens eines Vernetzers durchgeführt werden. Man erhält dann Copolymere mit einer höheren Molmasse als beim Polymerisieren der anionischen Monomeren in Abwesenheit eines Vernetzers. Der Einbau eines Vernetzers in die Polymeren führt außerdem zu einer verringerten Löslichkeit der Polymeren in Wasser. In Abhängigkeit von der Menge an einpolymerisiertem Vernetzer werden die Polymeren wasserunlöslich, sind jedoch in Wasser quellbar. Als Vernetzer können alle Verbindungen verwendet werden, die über mindestens zwei ethylenisch ungesättigte Doppelbindungen im Molekül verfügen. Beispiele für Vernetzer sind Triallylamin, Pentaerythrittriallylether, Pentaerythrittetraallylether, Methylenbisacrylamid, N,N'-Divinylethylenharnstoff, mindestens zwei Allylgruppen enthaltende Allylether oder mindestens zwei Vinylgruppen aufweisende Vinylether von mehrwertigen Alkoholen wie z.B. Sorbitol, 1,2-Ethandiol, 1,4-Butandiol, Trimethylolpropan, Glycerin, Diethylenglykol und von Zuckern wie Saccharose, Glucose, Mannose, vollständig mit Acrylsäure oder Methacrylsäure veresterte zweiwertige Alkohole mit 2 bis 4 C-Atomen wie Ethylenglykoldimethacrylat, Ethylenglykoldiacrylat, Butandioldimethacrylat, Butandioldiacrylat, Diacrylate oder Dimethacrylate von Polyethylenglykolen mit Molekulargewichten von 300 bis 600, ethoxylierte Trimethylenpropantriacrylate oder ethoxylierte Trimethylenpropantrimethacrylate, 2,2-Bis(hydroxymethyl)butanoltrimethacrylat, Pentaerythrittriacrylat, Pentaerythrittetraacrylat und Triallylmethylammoniumchlorid. Falls bei der Herstellung der erfindungsgemäßen Dispersionen Vernetzer eingesetzt werden, so betragen die jeweils verwendeten Mengen an Vernetzer beispielsweise 0,0005 bis 5,0, vorzugsweise 0,001 bis 1,0 Gew.-%, bezogen auf die bei der Polymerisation insgesamt eingesetzten Monomeren. Bevorzugt verwendete Vernetzer sind Pentaerythrittriallylether, Pentaerythrittetraallylether, N,N'-Divinylethylenharnstoff, mindestens zwei Allylgruppen enthaltende Allylether von Zuckern wie Saccharose, Glucose oder Mannose und Triallylamin sowie Mischungen dieser Verbindungen.

Falls die Polymerisation mindestens eines anionischen Monomeren in Gegenwart mindestens eines Vernetzers durchgeführt wird, stellt man vorzugsweise vernetzte Copolymerisate aus Acrylsäure und/oder Methacrylsäure her, indem man Acrylsäure und/oder Methacrylsäure in Gegenwart von Pentaerythrittriallylether, Pentaerythrittetraallylether, N,N'-Divinylethylenharnstoff, mindestens zwei Allylgruppen enthaltende Allylether von Zuckern wie Saccharose, Glucose oder Mannose oder Triallylamin sowie Mischungen dieser Verbindungen polymerisiert. In Abhängigkeit von den bei der Polymerisation eingesetzten Mengen an Vernetzern sind die entstehenden Polyelektrolytkomplexe in verdünnter wässriger Lösung bei pH-Werten > 7,0 löslich bzw. quellbar.

Die zur Bildung der Polyelektrolytkomplexe verwendeten kationischen Polymere sind vorzugsweise wasserlöslich, d.h. sie haben eine Löslichkeit in Wasser von mindestens 1 g/l bei 20°C. Kationische Polymere sind Polymere mit kationischen Gruppen, insbesondere organische Polymere mit quaternären Ammoniumgruppen. Es können auch Polymere mit primären, sekundären oder tertiären Amingruppen eingesetzt werden, sofern sie entweder durch im Reaktionsmedium enthaltene Säuren oder durch Säuregruppen des anionischen Polymers protoniert und so in kationische Gruppen umgewandelt werden. Die Amin- bzw. Ammoniumgruppen des kationischen Polymers können dabei als Substituenten oder als Teil der Polymerkette vorliegen. Sie können auch Teil eines aromatischen oder nicht-aromatischen Ringsystems sein.

Geeignete kationische Polymere sind z.B. Polymere aus der Gruppe der
(a) Vinylimidazoliumeinheiten enthaltende Polymere,
(b) Polydiallyldimethylammoniumhalogenide,
(c) Vinylamineinheiten enthaltende Polymere,
(d) Ethylenimineinheiten enthaltende Polymere,
(e) Dialkylaminoalkylacrylat- und/oder Dialkylaminoalkylmethacrylateinheiten enthaltende Polymere und
(f) Dialkylaminoalkylacrylamid- und/oder Dialkylaminoalkylmethacrylamideinheiten enthaltende Polymere.

Beispiele für kationische Polymere sind
(a) Homopolymerisate von Vinylimidazoliummethosulfat und/oder Copolymerisate aus Vinylimidazoliummethosulfat und N-Vinylpyrrolidon,
(b) Polydiallyldimethylammoniumchloride,
(c) Polyvinylamine,
(d) Polyethylenimine
(e) Polydimethylaminoethylacrylat, Polydimethylaminoethylmethacrylat, Copolymerisate aus Acrylamid und Dimethylaminoethylacrylat und Copolymerisate aus Acrylamid und Dimethylaminoethylmethacrylat, wobei die basischen Monomeren auch in Form der Salze mit Mineralsäuren oder in quaternierter Form vorliegen können,und
(f) Polydimethylaminoethylacrylamid, Polydimethylaminoethylmethacrylamid und Copolymerisate aus Acrylamid und Dimethylaminoethylacrylamid.

Die basischen Monomeren können auch in Form der Salze mit Mineralsäuren oder in quaternierter Form vorliegen. Die mittleren Molmassen M_{w} der kationischen Polymeren betragen mindestens 500. Sie liegen beispielsweise in dem Bereich von 500 bis 1 Million, vorzugsweise von 1 000 bis 500 000 oder 2 000 bis 100 000.

Vorzugsweise verwendet man als kationische Polymere
(a) Homopolymerisate von Vinylimidazoliummethosulfat und/oder Copolymerisaten aus Vinylimidazoliummethosulfat und N-Vinylpyrrolidon mit einer mittleren Molmasse M_{w} von jeweils 500 bis 500 000,
(b) Polydiallyldimethylammoniumchloride mit einer mittleren Molmasse M_{w} von 1000 bis 500 000,
(c) Polyvinylamine mit einer mittleren Molmasse M_{w} von 500 bis 1 Million und
(d) Polyethylenimine mit einer mittleren Molmasse M_{w} von 500 bis 1 Million.

Die unter (a) aufgeführten Copolymerisate aus Vinylimidazoliummethosulfat und N-Vinylpyrrolidon enthalten beispielsweise 10 bis 90 Gew.-% N-Vinylpyrrolidon einpolymerisiert. Anstelle von N-Vinylpyrrolidon kann man als Comonomer mindestens eine Verbindung aus der Gruppe der ethylenisch ungesättigten C₃- bis C₅-Carbonsäuren wie insbesondere Acrylsäure oder Methacrylsäure oder die Ester dieser Carbonsäuren mit 1 bis 18 C-Atome enthaltenden einwertigen Alkoholen wie Methylacrylat, Ethylacrylat, Isopropylacrylat, n-Butylacrylat, Isobutylacrylat, Methylmethacrylat, Ethylmethacrylat oder n-Butylmethacrylat einsetzen.

Als Polymere der Gruppe (b) kommt vorzugsweise Polydiallyldimethylammoniumchlorid in Betracht. Außerdem eignen sich Copolymerisate aus Diallyldimethylammoniumchlorid und Dimethylaminoethylacrylat, Copolymerisate aus Diallyldimethylammoniumchlorid und Dimethylaminoethylmethacrylat, Copolymerisate aus Diallyldimethylammoniumchlorid und Diethylaminoethylacrylat, Copolymerisate aus Diallyldimethylammoniumchlorid und Dimethylaminopropylacrylat, Copolymerisate aus Diallyldimethylammoniumchlorid und Dimethylaminoethylacrylamid und Copolymerisate aus Diallyldimethylammoniumchlorid und Dimethylaminopropylacrylamid. Die Copolymerisate von Diallyldimethylammoniumchlorid enthalten beispielsweise 1 bis 50, meistens 2 bis 30 Mol-% mindestens eines der genannten Comonomeren einpolymerisiert.

Vinylamineinheiten enthaltende Polymere (c) sind erhältlich durch Polymerisieren von N-Vinylformamid gegebenenfalls in Gegenwart von Comonomeren und Hydrolyse der Vinylformamidpolymeren unter Abspaltung von Formylgruppen unter Bildung von Aminogruppen. Der Hydrolysegrad der Polymeren kann beispielsweise 1 bis 100 % betragen und liegt meistens in dem Bereich von 60 bis 100 %. Die mittleren Molmassen M_{w} betragen bis zu 1 Million. Vinylamineinheiten enthaltende Polymere werden beispielsweise als Catiofast^{®} Marken von BASF SE vertrieben.

Ethylenimineinheiten enthaltende Polymere der Gruppe (d) wie Polyethylenimine sind ebenfalls Handelsprodukte. Sie werden beispielsweise unter der Bezeichnung Polymin® von BASF SE verkauft z.B. Polymin^{®} SK. Bei diesen kationischen Polymeren handelt es sich Polymere von Ethylenimin, die durch Polymerisieren von Ethylenimin in wässrigem Medium in Gegenwart geringer Mengen an Säuren oder säurebildenden Verbindungen wie halogenierten Kohlenwasserstoffen z.B. Chloroform, Tetrachlorkohlenstoff, Tetrachlorethan oder Ethylchlorid hergestellt werden oder um Kondensationsprodukte aus Epichlorhydrin und Aminogruppen enthaltenden Verbindungen wie Mono- und Polyaminen z.B. Dimethylamin, Diethylamin, Ethylendiamin, Diethylentriamin und Triethylentetramin oder Ammoniak. Sie haben beispielsweise Molmassen M_{w} von 500 bis 1 Million, vorzugsweise 1000 bis 500 000.

Zu dieser Gruppe von kationischen Polymeren gehören auch Pfropfpolymerisate von Ethylenimin auf Verbindungen, die eine primäre oder sekundäre Aminogruppe aufweisen, z.B. Polyamidoamine aus Dicarbonsäuren und Polyaminen. Die mit Ethylenimin gepfropften Polyamidoamine können gegebenenfalls noch mit bifunktionellen Vernetzer umgesetzt werden, beispielsweise mit Epichlorhydrin oder Bis-chlorhydrinethern von Polyalkylenglykolen.

Als kationische Polymere der Gruppe (e) kommen Dialkylaminoalkylacrylat- und/oder Dialkylaminoalkylmethacrylateinheiten enthaltende Polymere in Betracht. Diese Monomeren können in Form der freien Basen, vorzugsweise jedoch in Form der Salze mit Mineralsäuren wie Salzsäure, Schwefelsäure oder Phosphorsäure sowie in quaternierter Form bei der Polymerisation eingesetzt werden. Als Quaternierungsmittel kommen beispielsweise Dimethylsulfat, Diethylsulfat, Methylchlorid, Ethylchlorid, Cetylchlorid oder Benzylchlorid in Betracht. Aus diesen Monomeren können sowohl Homopolymerisate als auch Copolymerisate hergestellt werden. Als Comonomere eignen sich beispielsweise Acrylamid, Methacrylamid, N-Vinylformamid, N-Vinylpyrrolidon, Methylacrylat, Ethylacrylat, Methylmethacrylat und Mischungen der genannten Monomeren.

Kationische Polymere der Gruppe (f) sind Dimethylaminoethylacrylamid- oder Dimethylaminoethylmethacrylamid-Einheiten enthaltende Polymerisate, die die basischen Monomeren vorzugsweise in Form der Salze mit Mineralsäuren oder in quaternierter Form enthalten. Hierbei kann es sich um Homopolymerisate und um Copolymerisate handeln. Beispiele sind Homopolymere von Dimethylaminoehtylacrylamid, das mit Dimethylsulfat oder mit Benzylchlorid vollständig quaterniert ist, Homopolymere von Dimethylaminoethylmethacrylamid, das mit Dimethylsulfat, Methylchlorid, Ethylchlorid oder Benzylchlorid vollständig quaterniert ist sowie Copolymerisate aus Acrylamid und mit Dimethylsulfat quaterniertes Dimethylaminoethylacrylamid.

Bei der Herstellung der erfindungsgemäßen wässrigen Dispersionen werden folgende kationische Polymere vorzugsweise eingesetzt:
(a) Homopolymerisate von Vinylimidazoliummethosulfat und/oder Copolymerisate aus Vinylimidazoliummethosulfat und N-Vinylpyrrolidon mit einer mittleren Molmasse M_{w} von jeweils 1 000 bis 100 000,
(b) Polydiallyldimethylammoniumchloride mit einer mittleren Molmasse M_{w} von 2000 bis 100 000 und/oder
(c) Polyvinylamine mit einer mittleren Molmasse M_{w} von 1000 bis 500 000. Die Polyvinylamine werden vorzugsweise in Form der Salze mit Schwefelsäure oder Salzsäure eingesetzt.

Außer solchen Polymerisaten, die allein aus kationischen Monomeren aufgebaut sind, können auch amphotere Polymere als kationische Polymere unter der Voraussetzung eingesetzt werden, dass sie insgesamt eine kationische Ladung tragen. Die kationische Überschussladung in den amphoteren Polymerisaten beträgt beispielsweise mindestens 5 Mol-%, vorzugsweise mindestens 10 Mol-% und liegt meistens in dem Bereich von 15 bis 95 Mol-%. Beispiele für amphotere Polymere mit einer kationischen Überschussladung sind
- Copolymerisate aus Acrylamid, Dimethylaminoethylacrylat und Acrylsäure, die mindestens 5 Mol-% mehr Dimethylaminoehtylacrylat als Acrylsäure einpolymerisiert enthalten;
- Copolymerisate aus Vinylimidazoliummethosulfat, N-Vinylpyrrolidon und Acrylsäure, die mindestens 5 Mol-% mehr Vinylimidazoliummethosulfat als Acrylsäure einpolymerisiert enthalten;
- hydrolysierte Copolymerisate aus N-Vinylformamid und einer ethylenisch ungesättigten C₃- bis C₅-Carbonsäure, vorzugsweise Acrylsäure oder Methacrylsäure, mit einem um mindestens 5 Mol-% höheren Gehalt an Vinylamineinheiten als Einheiten an ethylenisch ungesättigten Carbonsäuren;
- Copolymerisate aus Vinylimidazol, Acrylamid und Acrylsäure, wobei der pH-Wert so gewählt ist, dass mindestens 5 Mol% mehr Vinylimidazol kationisch geladen ist, als Acrylsäure einpolymerisiert ist.

Wässrige Dispersionen von Polyelektrolytkomplexen können hergestellt werden, indem man die in Betracht kommenden anionischen Monomeren, gegebenenfalls in Gegenwart von anderen Monomeren, in wässrigem Medium in Gegenwart von kationischen Polymeren radikalisch polymerisiert. Die Menge an basischen bzw. kationischen Monomeren kann dabei so gewählt werden, dass die entstehenden Polymerkomplexe immer einen Überschuss an anionischer Ladung tragen, bestimmt bei pH 7 und 20°C. Die Bestimmung der Ladungsdichte der Polyelektrolyte bzw. Polyelektrolytkomplexe kann nach D. Horn, Progr. Colloid & Polymer Sci., Band 65, 251 -264 (1978) erfolgen. Basische Polymere werden vorzugsweise in Form der Salze mit Mineralsäuren oder organischen Säuren wie Ameisensäure oder Essigsäure bei der Polymerisation eingesetzt. Diese Salze bilden sich sonst ohnehin bei der Polymerisation, weil die Polymerisation bei einem pH-Wert < 6,0 durchgeführt wird.

Die erfindungsgemäß bevorzugten wässrigen Dispersionen von überwiegend anionisch geladenen Polyelektrolytkomplexen können durch radikalische Polymerisation von ethylenisch ungesättigten anionischen Monomeren in wässrigem Medium in Gegenwart mindestens eines wasserlöslichen kationischen Polymers hergestellt werden, wobei man pro Mol der insgesamt bei der Polymerisation eingesetzten anionischen Monomeren vorzugsweise 0,5 bis 49 Mol-% mindestens eines kationischen Polymers einsetzt. Die Polymerisation erfolgt in wässrigem Medium bei einem pH-Wert unterhalb von 6, z.B. in dem Bereich von 0 bis 5,9, vorzugsweise 1 bis 5 und insbesondere von 1,5 bis 3. Der in Betracht kommende pH-Wert ergibt sich meistens dadurch, dass man Säuregruppen enthaltende Polymere in Form der freien Säuregruppen bei der Polymerisation einsetzt. Der pH-Wert kann durch Zugabe einer Base wie insbesondere wässriger Natronlauge oder Kalilauge zur partiellen Neutralisation der Säuregruppen der anionischen Monomeren in dem angegebenen Bereich variiert werden. Sofern man jedoch von Alkalimetall-, Erdalkalimetall- oder Ammoniumsalzen der anionischen Monomeren ausgeht, gibt man entweder eine Mineralsäure oder eine organische Säure wie Ameisensäure, Essigsäure oder Propionsäure zur Einstellung des pH-Wertes hinzu.

Die Polymerisation kann gegebenenfalls zusätzlich in Gegenwart mindestens eines Kettenüberträgers durchgeführt werden. Man erhält dann Polymere, die eine niedrigere Molmasse besitzen als ohne Kettenüberträger hergestellte Polymere. Beispiele für Kettenüberträger sind organische Verbindungen, die Schwefel in gebundener Form enthalten wie Dodecylmercaptan, Thiodiglykol, Ethylthioethanol, Di-n-butylsulfid, Di-n-octylsulfid, Diphenylsulfid, Düsopropyldisulfid, 2-Mercaptoethanol, 1,3-Mercaptopropanol, 3-Mercaptopropan-1,2-diol, 1,4-Mercaptobutanol, Thioglykolsäure, 3-Mercaptopropionsäure, Mercaptobernseinsäure, Thioessigsäure und Thioharnstoff, Aldehyde, organische Säuren wie Ameisensäure, Natriumformiat oder Ammoniumformiat, Alkohole wie insbesondere Isopropanol sowie Phosphorverbindungen, z.B. Natriumhypophosphit. Man kann einen einzigen oder mehrere Kettenüberträger bei der Polymerisation einsetzen. Falls man sie bei der Polymerisation verwendet, setzt man sie beispielsweise in einer Menge von 0,01 bis 5,0, vorzugsweise 0,2 bis 1 Gew.-%, bezogen auf die gesamten Monomeren, ein. Die Kettenüberträger werden vorzugsweise zusammen mit mindestens einem Vernetzer bei der Polymerisation eingesetzt. Durch Variation der Menge und des Verhältnisses von Kettenüberträger und Vernetzer ist es möglich, die Rheologie der entstehenden Polymerisate zu steuern. Kettenüberträger und/oder Vernetzer können bei der Polymerisation beispielsweise im wässrigen Polymerisationsmedium vorgelegt oder zusammen oder getrennt von den Monomeren je nach Fortschreiten der Polymerisation zum Polymerisationsansatz dosiert werden. Bei der Polymerisation verwendet man üblicherweise Initiatoren, die unter den Reaktionsbedingungen Radikale bilden. Geeignete Polymerisationsinitiatoren sind beispielsweise Peroxide, Hydroperoxide, Wasserstoffperoxid, Natrium- oder Kaliumpersulfat, Redoxkatalysatoren und Azoverbindungen wie 2,2-Azobis(N,N- dimethylenisobutyramidin) dihydrochlorid, 2,2-Azobis(4-methoxy-2,4-dimethylvaleronitril), 2,2-Azobis(2,4-dimethylvaleronitril) und 2,2-Azobis(2-amidinopropan)dihydrochlorid. Die Initiatoren werden in den bei der Polymerisation üblichen Mengen eingesetzt. Bevorzugt werden Azo-starter als Polymerisationsinitiatoren verwendet. Man kann die Polymerisation jedoch auch mit Hilfe energiereicher Strahlen wie Elektronenstrahlen oder durch Bestrahlen mit UV-Licht initiieren.

Die Polymerisation der anionischen Monomeren wird beispielsweise diskontinuierlich durchgeführt, indem man die Monomeren und mindestens eine kationische Verbindung in einer Polymerisationszone vorlegt und den Polymerisationsinitiator portionsweise oder kontinuierlich dosiert. Bevorzugt wird jedoch eine semikontinuierliche Fahrweise, bei der man Wasser und Polymerisationsinitiator vorlegt und mindestens ein anionisches Monomer und mindestens ein kationisches Polymer kontinuierlich unter Polymerisationsbedingungen dosiert. Man kann jedoch auch den Initiator kontinuierlich oder portionsweise, aber getrennt vom Monomer-Zulauf und der Dosierung von kationischem Polymer in die Polymerisationszone einbringen. Man kann auch so vorgehen, dass man zunächst einen Teil der Monomeren z.B. 5 bis 10 Gew.-% zusammen mit einem entsprechenden Anteil an mindestens einem kationischen Polymer in einer Polymerisationszone vorlegt, die Polymerisation in Gegenwart eines Initiators startet und den verbliebenen Teil der Monomeren, des kationischen Polymeren und des Initiators kontinuierlich oder portionsweise zugibt. Die Polymerisation erfolgt üblicherweise in allen Fällen unter Ausschluss von Sauerstoff unter einer Inertgasatmosphäre beispielsweise unter Stickstoff oder Helium. Die Polymerisationstemperaturen liegen beispielsweise in dem Bereich von 5 bis 100°C, vorzugsweise 15 bis 90°C und meistens bei 20 bis 70°C. Die Polymerisationstemperatur hängt sehr von dem jeweiligen Initiator ab, der eingesetzt wird.

Die Konzentration der Polyelektrolytkomplexe in den zur Beschichtung eingesetzten Lösungen oder wässrigen Dispersionen beträgt vorzugsweise mindestens 1 Gew.-%, insbesondere mindestens 5 Gew.-% und bis zu 50 oder bis zu 60 Gew.-%. Meistens liegt der Gehalt an Polyelektrolytkomplexen in der wässrigen Dispersion bei 1 bis 40 Gew.-% oder bei 5 bis 35 Gew.-%, insbesondere bei 15 bis 30 Gew.-%.

Bevorzugte wässrige Dispersionen der Polyelektrolytkomplexe haben bei pH-Werten unterhalb von 6,0 und einer Temperatur von 20°C eine Viskosität von 100 bis 150 000 mPas, oder 200 bis 5 000 mPas (gemessen mit einem Brookfield-Viskosimeter bei 20°C, 20 UpM, Spindel 4). In Abhängigkeit von den Polymerisationsbedingungen und den jeweils verwendeten Monomeren oder Kombinationen von Monomeren und Hilfsstoffen wie Kettenüberträgern haben die Polyelektrolytkomplexe unterschiedliche Molmassen. Die mittlere Molmasse M_{w} der Polyelektrolytkomplexe beträgt beispielsweise 1 000 bis 10 Millionen, vorzugsweise 5 000 bis 5 Millionen und liegt meistens in dem Bereich von 10 000 bis 3 Millionen. Die Bestimmung der Molmasse erfolgt mit Hilfe der Lichtstreuung. Die mittlere Teilchengröße der dispergierten Polyelektrolytkomplexe beträgt beispielsweise 0,1 bis 200 µm, vorzugsweise 0,5 bis 70 µm. Sie kann z. B. mit Hilfe der optischen Mikroskopie, der Lichtstreuung oder der Gefrierbruchelektronenmikroskopie bestimmt werden.

Ausführungsformen der Erfindung sind insbesondere die Verwendung von Polyelektrolytkomplexen gebildet aus
* Homopolymeren der Acrylsäure und Vinylimidazoliumeinheiten enthaltenden Polymeren;
* Homopolymeren der Acrylsäure und Homopolymere mit Vinylimidazoliumeinheiten;
* Homopolymeren der Acrylsäure und Copolymere aus Monomeren mit Vinylimidazoliumeinheiten und Vinyllactamen, insbesondere Vinylpyrrolidon;
* Copolymeren der Acrylsäure mit 2-Acrylamido-2-methyl-propansulfonsäure und Vinylimidazoliumeinheiten enthaltenden Polymeren;
* Copolymeren der Acrylsäure mit 2-Acrylamido-2-methyl-propansulfonsäure und Homopolymere mit Vinylimidazoliumeinheiten;
* Copolymeren der Acrylsäure mit 2-Acrylamido-2-methyl-propansulfonsäure und Copolymere aus Monomeren mit Vinylimidazoliumeinheiten und Vinyllactamen, insbesondere Vinylpyrrolidon.

Beim erfindungsgemäßen Verfahren werden zur Verpackung geeignete Substrate mit einer wässrigen Lösung oder Dispersion mindestens eines Polyelektrolytkomplexes beschichtet. Geeignete Substrate sind insbesondere Papier, Karton und Folien z.B. aus Kunststoff oder Metall. Die zur Beschichtung eingesetzten Lösungen oder Dispersionen können weitere Zusatz- oder Hilfsstoffe enthalten, z.B. Verdicker zur Einstellung der Rheologie, Benetzungshilfsmittel oder Bindemittel.

Die Anwendung kann beispielsweise auf Beschichtungsmaschinen in der Weise vorgenommen werden, dass man auf Papier, Karton oder auf eine Trägerfolie aus einem Kunststoff oder einem Metall die Beschichtungszusammensetzung aufträgt. Sofern bahnförmige Materialien verwendet werden, wird die Polymerdispersion üblicherweise aus einer Wanne über eine Auftragswalze aufgetragen und mit Hilfe einer Luftbürste egalisiert. Andere Möglichkeiten, die Beschichtung aufzubringen, gelingt z.B. mit Hilfe des Reverse Gravure-Verfahrens, mit Sprühverfahren oder mit einem Rollrakel.

In einer Ausführungsform wird der Polyelektrolytkomplex erst in situ auf dem Verpackungsmaterial gebildet, indem zwei Beschichtungszusammensetzungen gleichzeitig oder in einem Arbeitsschritt unmittelbar nacheinander, z.B. durch eine Kaskadenbeschichtung, aufgetragen werden, wobei eine der Beschichtungszusammensetzungen mindestens ein anionisches Polymer enthält und die andere Beschichtungszusammensetzung mindestens ein kationisches Polymer enthält. Bevorzugt ist dabei, dass zunächst mindestens eine erste Beschichtungszusammensetzung aufgetragen wird, welche mindestens ein kationisches Polymer mit primären, sekundären oder tertiären Amingruppen enthält und anschließend mindestens eine zweite Beschichtungszusammensetzung aufgetragen wird, welche mindestens ein anionisches Polymer mit Säuregruppen enthält. Die kationischen Polymere mit Aminogruppen sind z.B. Polymere mit Einheiten ausgewählt aus der Gruppe bestehend aus Vinylamin, Ethylenimin, Dialkylaminoalkylacrylat, Dialkylaminoalkylmethacrylat, Dialkylaminoalkylacrylamid, Dialkylaminoalkylmethacrylamid und deren Mischungen; insbesondere Polyvinylamine, Polyethylenimine, Polydimethylaminoethylacrylat, Polydimethylaminoethylmethacrylat, Copolymerisate aus Acrylamid und Dimethylaminoethylacrylat und Copolymerisate aus Acrylamid und Dimethylaminoethylmethacrylat. Die anionischen Polymere mit Säuregruppen sind z.B. Polymere mit Einheiten ausgewählt aus Acrylsäure, Methacrylsäure, Maleinsäure, 2-Acrylamido-2-methylpropansulfonsäure und deren Mischungen, insbesondere Homopolymere der Acrylsäure und Copolymere der Acrylsäure und der 2-Acrylamido-2-methylpropansulfonsäure.

Um die Haftung auf einer Folie noch zu verbessern, kann die Trägerfolie zuvor einer Corona-Behandlung unterworfen werden. Die auf die flächigen Materialien aufgetragenen Mengen betragen z.B. vorzugsweise 1 bis 10 g (Polymer, fest) pro m², vorzugsweise 2 bis 7 g/m² bei Folien, bzw. vorzugsweise 10 bis 30 g/m² bei Papier oder Karton. Nach dem Aufbringen der Polyelektrolytkomplexe auf die flächigen Substrate wird das Lösungsmittel verdampft. Hierfür kann man beispielsweise bei kontinuierlichem Arbeiten das Material durch einen Trocknerkanal führen, der mit einer InfrarotBestrahlungsvorrichtung ausgestattet sein kann. Danach wird das beschichtete und getrocknete Material über eine Abkühlwalze geführt und schließlich aufgewickelt. Die Dicke der getrockneten Beschichtung beträgt vorzugsweise 1 bis 50 µm, besonders bevorzugt 2 bis 20 µm.

Die mit dem Polyelektrolytkomplex beschichteten Substrate zeigen eine hervorragende Barrierewirkung gegen Fette und Öle, insbesondere im Bereich von Knicken, Falten und Ecken von Verpackungen aus Papier oder Karton. Die beschichteten Substrate können als solche als Verpackungsmittel verwendet werden, vorzugsweise für Lebensmittel. Die Beschichtungen haben sehr gute mechanische Eigenschaften, und zeigen z.B. gutes Blockverhalten und zeigen im Wesentlichen keine Rissbildungen.

Um spezielle Oberflächen- oder Beschichtungseigenschaften der Verpackungsmittel, zu erhalten, beispielsweise eine gute Bedruckbarkeit, noch besseres Siegel- und Blockverhalten, gute Wasserbeständigkeit, kann es vorteilhaft sein, die beschichteten Substrate mit Deckschichten überzubeschichten, die diese gewünschten Eigenschaften zusätzlich verleihen. Die mit Polyelektrolytkomplexen vorbeschichteten Substrate zeigen eine gute Überbeschichtbarkeit. Es kann erneut nach einem oben angeführten Verfahren überbeschichtet oder in einem kontinuierlichen Prozess ohne zwischenzeitliches Auf- und Abwickeln z.B. der Folie oder des Papiers mehrfach beschichtet werden. Die Fettbarriereschicht befindet sich dadurch im Inneren des Systems, die Oberflächeneigenschaften werden dann von der Deckschicht bestimmt. Die Deckschicht hat eine gute Haftung zur Fettbarriereschicht.

Nach dem beschriebenen Verfahren lassen sich in einfacher Weise fett- und ölundurchlässige Beschichtungen, z.B. auf Folien aus orientiertem Polypropylen oder Polyethylen, herstellen, wobei das Polyethylen sowohl nach dem Hochdruck als auch nach dem Niederdruck Polymerisationsverfahren von Ethylen hergestellt worden sein kann. Andere geeignete Trägerfolien sind beispielsweise Folien aus Polyester, wie Polyethylenterephthalat, Folien aus Polyamid, Polystyrol und Polyvinylchlorid. Als Trägermaterialien eignen sich außerdem Papiere und Metallfolien wie Aluminiumfolie. Die Dicke der Trägerfolien liegt im allgemeinen in dem Bereich von 10 bis 200 µm, bei Folien aus Polyamid bei 30 bis 50 µm, bei Folien aus Polyethylenterephthalat bei 10 bis 40 µm, bei Folien aus Polyvinylchlorid bei ca. 200 µm und bei Folien aus Polystyrol bei etwa 20 µm.

Besonders bevorzugt sind Trägermaterialien aus Papier oder Pappe, insbesondere für eine Herstellung von beschichteten Faltschachteln:

### Beispiele

Folgende Abkürzungen und Produkte werden verwendet:
- AS: Acrylsäure
- AMPS: 2-Acrylamido-2-methyl-propansulfonsäure
- K1: Copolymer aus 25% Vinylimidazoliumchlorid und 75% Vinylpyrrolidon
- K2: Copolymer aus 43% Vinylimidazoliumchlorid und 57% Vinylpyrrolidon
- K3:: Homopolymer aus Vinylimidazoliummethosulfat
- QVI: mit einer Methylgruppe quaternisiertes Vinylimidazol
- V50: 2,2'-Azobis(2-amidinopropan)dihydrochlorid

### Beispiele 1-5

### Herstellung des Polyelektrolytkomplexes

Zu einer für die Herstellung einer 20 Gew.%igen Dispersion ausreichenden Menge Wasser werden die in der nachfolgenden Tabelle angegebenen Mengen von Acrylsäure, Ammoniumhydroxidlösung und AMPS zugegeben. Parallel wird das kationische Polymer in den in der nachfolgenden Tabelle angegebenen Mengen zugeführt. Nachdem 0,1 mol% des Initiators V50 zugefügt werden, erfolgen Komplexbildung und Emulsionspolymerisation gleichzeitig in einer Sitickstoffatmosphäre bei 50 °C innerhalb von 5 Stunden unter Rühren.

**Tabelle 1: Mengenangaben in mol**

| Beispiel | Kat. Polymer | QVI ¹⁾ | NH4OH | AS | AMPS |
|---|---|---|---|---|---|
| 1 | K1 | 0,03 | 0,03 | 1 | 0 |
| 2 | K2 | 0,053 | 0,053 | 1 | 0 |
| 3 | K3 | 0,1 | 0,1 | 1 | 0 |
| 4 | K2 | 0,069 | 0 | 0,945 | 0,055 |
| 5 | K2 | 0,052 | 0,047 | 0,99 | 0,01 |

| | | | | | |
|---|---|---|---|---|---|
| 1) Menge an QVI (Bestandteil des kationischen Polymers) | | | | | |

Es werden 20%ige wässrige Dispersionen von Polyelektrolytkomplexen mit Viskositäten von 250 bis 1500 mPa s erhalten.

### Beschichtetes Papier

Die Polyelektrolytkomplexdispersionen werden ohne weitere Reinigung zur Beschichtung von Papier eingesetzt. Das verwendete Papier hat ein Flächengewicht von 60-80 g/m². Das Papier ist vorgestrichen mit einer pigmentierten Streichfarbe zur Bildung einer dünnen Polymerbeschichtung (0,5 µm) zum Porenausgleich. Mit einem Rollrakel werden die vorgestrichenen Papiere mit jeweils einer der Dispersionen 1 bis 5 in einer Schichtdicke zwischen 15 und 20 µm (nach Trocknung) beschichtet.

### Beispiel 6

Eine erste Beschichtungszusammensetzung enthält 6 Gew.% Polyvinylamin in Wasser. Eine zweite Beschichtungszusammensetzung enthält 20 Gew.% Polyacrylsäure in Wasser. Das oben genannte Papier wird zunächst mit 3,5 g/m² der ersten Beschichtungszusammensetzung beschichtet und anschließend mit 12 g/m² der zweiten Beschichtungszusammensetzung.

### Vergleichsbeispiel V1: Beschichtung mit kationischem Polymer

Das oben genannte Papier wird mit 10 g/m² einer Beschichtungszusammensetzung beschichtet, welche als einziges Polymer 20 Gew.% eines zu 5% hydrolysierten Poly(N-Vinylformamids) in Wasser enthält.

### Vergleichsbeispiel V2: Beschichtung mit anionischem Polymer

Das oben genannte Papier wird wie oben mit einer Beschichtungszusammensetzung beschichtet, welche als einziges Polymer 20 Gew.% Polyacrylsäure in Wasser enthält.

### Barrieretests

Die nachfolgenden Untersuchungen wurden beschichteten Papieren durchgeführt, welche einseitig mit Polyelektrolytkomplexen beschichtet wurden. Die Schichtdicke der Beschichtung betrug 20 µm und das Flächengewicht betrug 20 g/m² (trocken). Die Größe der Papierblätter betrug 20 cm x 30 cm.

Die Filme sind flexibel und (mindestens) bis 80 °C stabil. Die Beschichtungen sind bei 80°C blockfest. Nach Erwärmen auf 80°C für 72 Stunden unter einem Druck von 100 N/m2 zeigt sich keine Degeneration oder Klebrigkeit.

### 3M Kit Test - Barriereeigenschaften an Knickstellen

Für den Test werden 12 Testlösungen T1 bis T12 verwendet:

| Testlösung | Rizinusöl (ml) | Toluol (ml) | n-Heptan (ml) |
|---|---|---|---|
| T1 | 200 | 0 | 0 |
| T2 | 180 | 10 | 10 |
| T3 | 160 | 20 | 20 |
| T4 | 140 | 30 | 30 |
| T5 | 120 | 40 | 40 |
| T6 | 100 | 50 | 50 |
| T7 | 80 | 60 | 60 |
| T8 | 60 | 70 | 70 |
| T9 | 40 | 80 | 80 |
| T10 | 20 | 90 | 90 |
| T11 | 0 | 100 | 100 |
| T12 | 0 | 90 | 110 |

Es werden jeweils 5 Proben der beschichteten Papiere einer Größe von 5x5 cm verwendet. Auf die beschichtete Seite einer Papierprobe wird ein Tropen einer mittleren Testlösung (z.B. T7) aus einer Höhe von 2,5 cm fallen gelassen. Nach 15 Sekunden wird der Tropfen mit einem absorbierenden Material aufgewischt und die kontaminierte Stelle wird optisch untersucht. Falls die Stelle fleckig aussieht, wird der Test mit einer Testlösung mit einer niedrigeren Nummer wiederholt (z.B. T6). Falls die kontaminierte Stelle nicht fleckig aussieht, wird der Test mit einer Testlösung einer höheren Nummer wiederholt (z.B. T8), wobei die Testwiederholungen auf einer unkontaminierten Fläche der Papierprobe erfolgen.

Es wird jeweils eine Testreihe mit ungefaltetem, glatten Papier und eine Testreihe mit gefaltetem Papier durchgeführt. Bei der Testreihe mit gefaltetem Papier wird das beschichtete Papier zusammengefaltet und wieder auseinandergefaltet. Die Testlösungen werden dabei auf den durch die Faltung entstandenen Falz getropft. Es wird jeweils die höchste Nummer derjenigen Testlösung notiert, bei der keine Fleckenbildung beobachtet wurde. Der Endwert ist der Mittelwert aus 5 Untersuchungen, gerundet auf 0,5.

Die Ergebnisse sind in Tabelle 2 zusammengefasst.

**Tabelle 2 3M Kit Testergebnisse**

| Beispiel | ungefaltete Oberfläche | gefaltete Oberfläche |
|---|---|---|
| 1 | 12 | 9 |
| 2 | 12 | 9 |
| 3 | 12 | 10 |
| 4 | 12 | 12 |
| 5 | 12 | 12 |
| 6 | 12 | 9 |
| V1 | < 8 | < 8 |

Die angestrebten Mindestanforderungen von Penetrationswerten von mindestens 8-9 für gefaltetes Papier und von 12 für ungefaltetes Papier wurden von allen erfindungsgemäßen Beispielen erreicht oder übererfüllt.

### Penetrationstest

Als Testsubstanzen wurden verwendet:
a) Ölsäure
b) Mischung von 900 g Terpentin und 100 g Mineralöl mit Siedepunkt 100-140 °C und 2,5 g Sudanblau

Die Testsubstanz wird auf die beschichtete Papierseite aufgetragen. Im Fall von Testsubstanz b) wurde wegen der Flüchtigkeit der Substanz der Substanzauftrag von Zeit zu Zeit wiederholt, um eine ständige Benetzung sicherzustellen. Nach den in der nachfolgenden Tabelle angegebenen Zeiträumen wird der prozentuale Anteil an blau gefärbten Fettstellen auf der unbeschichteten Papieroberfläche bestimmt. Die angegebenen Werte entsprechen dem ungefähren Prozentsatz an blau eingefärbter Oberfläche.

**Tabelle 3 Penetrationstest mit Ölsäure**

| Beispiel | 10 min | 60 min | 5 h | 1 d | 2 d | 3 d | 7 d |
|---|---|---|---|---|---|---|---|
| 1 | 0 | 0 | 0 | 0 | 0 | 0 | 0 |
| 2 | 0 | 0 | 0 | 0 | 0 | 0 | 0 |
| 3 | 0 | 0 | 0 | 0 | 0 | 0 | 0 |
| 4 | 0 | 0 | 0 | 0 | 0 | 0 | 0 |
| 5 | 0 | 0 | 0 | 0 | 0 | 0 | 1 |
| 6 | 0 | 0 | 0¹⁾ | - | - | - | - |
| V1 | 100 | - | - | - | - | - | - |
| V2 | 0 | 1 | 20 | - | - | - | - |

| | | | | | | | |
|---|---|---|---|---|---|---|---|
| ¹⁾ nach 6 Stunden | | | | | | | |

Die angestrebten Mindestanforderungen von 24 Stunden vollständiger Penetrationsresistenz gegenüber Ölsäure wurden von allen erfindungsgemäßen Beispielen übererfüllt.

**Tabelle 4 Penetrationstest mit Terpentin/Mineralöl**

| Beispiel | 10 min | 60 min | 5 h |
|---|---|---|---|
| 1 | 0 | 0 | 0 |
| 2 | 0 | 0 | 0 |
| 3 | 0 | 0 | 0 |
| 4 | 0 | 0 | 0 |
| 5 | 0 | 0 | 0 |
| 6 | 0 | 0 | 0¹⁾ |
| V1 | 100 | - | - |

| | | | |
|---|---|---|---|
| ¹⁾ nach 6 Stunden | | | |

## Patentansprüche

1. Verfahren zur Herstellung einer Verpackung, wobei
a) ein als Verpackungsmaterial geeignetes Substrat bereitgestellt wird,
b) das Substrat zu einer Verpackung geformt wird und
c) vor während oder nach der Formung der Verpackung mindestens ein Teil der Verpackungsoberfläche mit mindestens einem Polyelektrolytkomplex beschichtet wird, wobei der Polyelektrolytkomplex aus mindestens einem ersten Polymer und mindestens einem zweiten Polymer besteht, wobei das erste Polymer ein anionisches Polymer und das zweite Polymer ein kationisches Polymer mit einer mittleren Molmasse Mw von mindestens 500 ist.

2. Verfahren nach Anspruch 1, **dadurch gekennzeichnet, dass** die mit dem Polyelektrolytkomplex hergestellte Beschichtung Fettbarriereeigenschaften aufweist.

3. Verfahren nach einem der vorhergehenden Ansprüche, **dadurch gekennzeichnet, dass** das anionische Polymer ausgewählt ist aus Polymeren, die herstellbar sind aus Monomeren, ausgewählt aus der Gruppe bestehend aus monoethylenisch ungesättigten C₃- bis C₁₀-Carbonsäuren, Vinylsulfonsäure, Styrolsulfonsäure, Acrylamidomethylpropansulfonsäure, Vinylphosphonsäure und Salzen dieser Säuren.

4. Verfahren nach Anspruch 3, **dadurch gekennzeichnet, dass** das anionische Polymer ausgewählt ist aus Homopolymeren der Acrylsäure, Copolymeren der Acrylsäure und der Acrylamidomethylpropansulfonsäure, Homopolymeren der Methacrylsäure und Copolymeren der Methacrylsäure und der Acrylamidomethylpropansulfonsäure

5. Verfahren nach einem der vorhergehenden Ansprüche, **dadurch gekennzeichnet, dass** das kationische Polymer ausgewählt ist aus der Gruppe bestehend aus Vinylimidazoliumeinheiten enthaltenden Polymeren, Polydiallyldimethylammoniumhalogeniden, Vinylamineinheiten enthaltenden Polymeren, Ethylenimineinheiten enthaltenden Polymeren, Dialkylaminoalkylacrylateinheiten enthaltenden Polymeren, Dialkylaminoalkylmethacrylateinheiten enthaltenden Polymeren, Dialkylaminoalkylacrylamideinheiten enthaltenden Polymeren und Dialkylaminoalkylmethacrylamideinheiten enthaltenden Polymeren.

6. Verfahren nach Anspruch 5, **dadurch gekennzeichnet, dass** das kationische Polymer ausgewählt ist aus Vinylimidazoliumeinheiten enthaltenden Polymeren.

7. Verfahren nach einem der vorhergehenden Ansprüche, **dadurch gekennzeichnet, dass** zwei Beschichtungszusammensetzungen gleichzeitig oder in einem Arbeitsschritt unmittelbar nacheinander aufgetragen werden, wobei eine der Beschichtungszusammensetzungen das erste Polymer enthält und die andere Beschichtungszusammensetzung das zweite Polymer enthält.

8. Verfahren nach Anspruch 7, **dadurch gekennzeichnet, dass** zunächst mindestens eine erste Beschichtungszusammensetzung aufgetragen wird, welche mindestens ein kationisches Polymer mit primären, sekundären oder tertiären Amingruppen enthält und anschließend mindestens eine zweite Beschichtungszusammensetzung aufgetragen wird, welche mindestens ein anionisches Polymer mit Säuregruppen enthält.

9. Verfahren nach einem der vorhergehenden Ansprüche, **dadurch gekennzeichnet, dass** die Beschichtung mit dem Polyelektrolytkomplex in Form einer wässrigen Dispersion erfolgt.

10. Verfahren nach Anspruch 9, **dadurch gekennzeichnet, dass** die wässrige Dispersion einen Gehalt an 1 bis 40 Gew.% Polyelektrolytkomplex enthält.

11. Verfahren nach einem der vorhergehenden Ansprüche, **dadurch gekennzeichnet, dass** das Substrat des Verpackungsmaterials ausgewählt ist aus Papier, Pappe, Kunststofffolien und Metallfolien.

12. Verpackung, hergestellt gemäß Anspruch 1.

13. Verwendung von Polyelektrolytkomplexen zur Herstellung von beschichteten Verpackungen gemäß Anspruch 1.

14. Verwendung von Polyelektrolytkomplexen nach Anspruch 13 zur Verbesserung der Fettbarriereeigenschaften von Verpackungen.

## Claims

1. A method of producing packaging,
a) a substrate suitable as packaging material being provided,
b) the substrate being shaped to form packaging, and
c) before, during or after the shaping of the packaging, at least part of the packaging surface being coated with at least one polyelectrolyte complex,
the polyelectrolyte complex being composed of at least one first polymer and at least one second polymer, the first polymer being an anionic polymer and the second polymer being a cationic polymer having an average molar mass Mw of at least 500.

2. The method according to claim 1, wherein the coating produced with the polyelectrolyte complex has fat barrier properties.

3. The method according to any of the preceding claims, wherein the anionic polymer is selected from polymers which are preparable from monomers selected from the group consisting of monoethylenically unsaturated C₃ to C₁₀ carboxylic acids, vinyl sulfonic acid, styrenesulfonic acid, acrylamidomethylpropanesulfonic acid, vinylphosphonic acid and salts of these acids.

4. The method according to claim 3, wherein the anionic polymer is selected from homopolymers of acrylic acid, copolymers of acrylic acid and of acrylamidomethylpropanesulfonic acid, homopolymers of methacrylic acid and copolymers of methacrylic acid and acrylamidomethylpropanesulfonic acid.

5. The method according to any of the preceding claims, wherein the cationic polymer is selected from the group consisting of polymers comprising vinylimidazolium units, polydiallyldimethylammonium halides, polymers comprising vinylamine units, polymers comprising ethyleneimine units, polymers comprising dialkylaminoalkyl acrylate units, polymers comprising dialkylaminoalkyl methacrylate units, polymers comprising dialkylaminoalkylacrylamide units and dialkylaminoalkylmethacrylamide units.

6. The method according to claim 5, wherein the cationic polymer is selected from polymers comprising vinylimidazolium units.

7. The method according to any of the preceding claims, wherein two coating compositions are applied simultaneously or in one workstep immediately after one another, one of the coating compositions comprising the first polymer and the other coating composition comprising the second polymer.

8. The method according to claim 7, wherein first at least one first coating composition is applied which comprises at least one cationic polymer having primary, secondary or tertiary amine groups, and then at least one second coating composition is applied which comprises at least one anionic polymer having acid groups.

9. The method according to any of the preceding claims, wherein the coating takes place with the polyelectrolyte complex in the form of an aqueous dispersion.

10. The method according to claim 9, wherein the aqueous dispersion comprises 1% to 40% by weight of polyelectrolyte complex.

11. The method according to any of the preceding claims, wherein the substrate of the packaging material is selected from paper, cardboard, plastic films and metal foils.

12. Packaging produced according to claim 1.

13. The use of polyelectrolyte complexes for producing coated packaging according to claim 1.

14. The use of polyelectrolyte complexes according to claim 13 for improving the fat barrier properties of packaging.

## Revendications

1. Procédé pour la fabrication d'un emballage, où
a) un substrat approprié comme matériau d'emballage est mis à disposition,
b) le substrat est façonné en un emballage, et
c) au moins une partie de la surface de l'emballage est revêtue, avant, pendant ou après le façonnage de l'emballage, par au moins un complexe polyélectrolytique, le complexe polyélectrolytique étant constitué par au moins un premier polymère et au moins un deuxième polymère, le premier polymère étant un polymère anionique et le deuxième polymère étant un polymère cationique présentant une masse molaire moyenne M_{w} d'au moins 500.

2. Procédé selon la revendication 1, **caractérisé en ce que** le revêtement fabriqué avec le complexe polyélectrolytique présente des propriétés de barrière aux graisses.

3. Procédé selon l'une quelconque des revendications précédentes, **caractérisé en ce que** le polymère anionique est choisi parmi les polymères qui peuvent être préparés à partir de monomères choisis dans le groupe constitué par les acides carboxyliques éthyléniquement monoinsaturés en C₃-C₁₀, l'acide vinylsulfonique, l'acide styrènesulfonique, l'acide acrylamidométhylpropanesulfonique, l'acide vinylphosphonique et les sels de ces acides.

4. Procédé selon la revendication 3, **caractérisé en ce que** le polymère anionique est choisi parmi les homopolymères de l'acide acrylique, les copolymères de l'acide acrylique et de l'acide acrylamidométhylpropanesulfonique, les homopolymères de l'acide méthacrylique et les copolymères de l'acide méthacrylique et de l'acide acrylamidométhylpropanesulfonique.

5. Procédé selon l'une quelconque des revendications précédentes, **caractérisé en ce que** le polymère cationique est choisi dans le groupe constitué par les polymères contenant des unités vinylimidazolium, les halogénures de polydiallyldiméthylammonium, les polymères contenant des unités vinylamine, les polymères contenant des unités éthylène-imine, les polymères contenant des unités acrylate de dialkylaminoalkyle, les polymères contenant des unités méthacrylate de dialkylaminoalkyle, les polymères contenant des unités dialkylaminoalkylacrylamide et les polymères contenant des unités dialkylaminoalkylméthacrylamide.

6. Procédé selon la revendication 5, **caractérisé en ce que** le polymère cationique est choisi parmi les polymères contenant des unités vinylimidazolium.

7. Procédé selon l'une quelconque des revendications précédentes, **caractérisé en ce que** deux compositions de revêtement sont appliquées simultanément ou directement l'une après l'autre dans une étape de travail, une des compositions de revêtement contenant le premier polymère et l'autre composition de revêtement contenant le deuxième polymère.

8. Procédé selon la revendication 7, **caractérisé en ce qu'**on applique d'abord au moins une première composition de revêtement, qui contient au moins un polymère cationique présentant des groupes amine primaires, secondaires ou tertiaires et ensuite au moins une deuxième composition de revêtement, qui contient au moins un polymère anionique présentant des groupes acides.

9. Procédé selon l'une quelconque des revendications précédentes, **caractérisé en ce que** le revêtement par le complexe polyélectrolytique a lieu sous forme d'une dispersion aqueuse.

10. Procédé selon la revendication 9, **caractérisé en ce que** la dispersion aqueuse contient une teneur de 1 à 40% en poids en complexe polyélectrolytique.

11. Procédé selon l'une quelconque des revendications précédentes, **caractérisé en ce que** le substrat du matériau d'emballage est choisi parmi le papier, le carton-pâte, les feuilles en matériau synthétique et les feuilles en métal.

12. Emballage, fabriqué selon la revendication 1.

13. Utilisation de complexes polyélectrolytiques pour la préparation d'emballages revêtus selon la revendication 1.

14. Utilisation de complexes polyélectrolytiques selon la revendication 13 pour améliorer les propriétés de barrière aux graisses d'emballages.
